**Europäisches Patentamt**

**European Patent Office**

**Office européen des brevets**

(19)

(11) Veröffentlichungsnummer: **0 201 058**
**A2**

(12) # EUROPÄISCHE PATENTANMELDUNG

(21) Anmeldenummer: **86106036.6**

(22) Anmeldetag: **02.05.86**

(51) Int. Cl.⁴: **G 05 D 16/06, F 26 B 5/04**

(30) Priorität: **08.05.85 DE 3516551**

(43) Veröffentlichungstag der Anmeldung: **12.11.86**
**Patentblatt 86/46**

(84) Benannte Vertragsstaaten: **DE FR GB IT**

(71) Anmelder: **Leybold-Heraeus GmbH, Bonner Strasse 498 Postfach 51 07 60, D-5000 Köln 51 (DE)**

(72) Erfinder: **Springer, Gerhard, Kurveneck 15, D-2000 Hamburg 63 (DE)**

(74) Vertreter: **Leineweber, Jürgen, Am Heidstamm 78a, D-5000 Köln 40 (DE)**

(54) **Saugvermögensregler für Vakuumtrocknungsprozesse.**

(57) Um einen Saugvermögensregler (1) für Vakuumpumpen (3) mit einer mit dem zu evakuierenden Rezipienten (2) zu verbindenden Kammer (Rezipientendruckkammer 19), einer mit der Vakuumpumpe zu verbindenden Kammer (Pumpendruckkammer 22), einer Referenzdruckkammer (9) und einer Verbindung (27) zwischen der Rezipientendruckkammer und der Pumpendruckkammer mit einstellbarem Durchlaßquerschnitt für Vakuumtrocknungsprozesse geeignet zu gestalten, wird vorgeschlagen, das Steuerorgan für den einstellbaren Durchlaßquerschnitt derart zu betätigen, daß der Durchlaßquerschnitt der Verbindung (27) zwischen Rezipientendruckkammer (19) und Pumpendruckkammer (22) mit abnehmendem Pumpendruck größer wird.

LEYBOLD-HERAEUS GMBH
Köln-Bayenthal

Saugvermögensregler

Die Erfindung betrifft einen Saugvermögensregler für Vakuumpumpen mit einer mit dem zu evakuierenden Rezipienten zu verbindenden Kammer (Rezipientendruckkammer), einer mit der Vakuumpumpe zu verbindenden Kammer (Pumpendruckkammer), einer Referenzdruckkammer, einer Verbindung zwischen der Rezipientendruckkammer und der Pumpendruckkammer mit einstellbarem Durchlaßquerschnitt, einem in Abhängigkeit von einem Differenzdruck sich verstellenden Antriebsorgan und einem davon angetriebenen Steuerorgan für die Einstellung des Durchlaßquerschnittes der Verbindung zwischen Rezipientendruckkammer und Pumpendruckkammer.

Werden Vakuum-Trocknungsprozesse ohne Kondensation durchgeführt, besteht das Problem, daß das zu entfernende Lösungsmittel oder Wasser dampfförmig durch die mechanisch verdichtende Vakuumpumpe ausgefördert werden muß. Auch während der Kompression auf Atmosphärendruck darf keine Kondensation in der Pumpe stattfinden. Gasballastpumpen haben durch ihre Gasballasteinrichtung eine sogenannte "Dampfverträglichkeit", die aussagt, welche maximale Menge eines bestimmten Dampfes pro Zeiteinheit gefördert werden kann, ohne daß Kondensation in der Pumpe eintritt. Gasballastpumpen haben als volumetrisch fördernde Pumpen ein konstantes Fördervolumen pro Zeiteinheit, das bedeutet, daß die geförderte Menge pro Zeiteinheit stark abhängig ist vom Ansaugdruck. Für Wasserdampf gilt z. B., daß eine gegebene Pumpe zum Abpumpen einer bestimmten Menge bei 5 mbar fünf- bis sechsmal solange braucht wie bei 30 mbar. Daraus ergibt sich, daß eine Gasballastpumpe bei einem Vakuum-Trocknungsprozeß aus ökonomischen Gründen bei möglichst hohem Ansaugdruck arbeiten sollte.

Die Grenze ist durch die Dampfverträglichkeit gegeben. Das bisher Gesagte gilt allerdings nur, solange die Verdampfungsrate größer oder gleich der Förderleistung der Pumpe ist. Dieser Zustand wird in der Praxis oft "Haupttrocknung" genannt.

Wird die Verdampfungsrate geringer, spricht man von der "Nachtrocknung". In dieser Phase gilt, daß die anfallende Dampfmenge größer wird, je niedriger der Druck der Umgebung wird. Die physikalischen Zusammenhänge in der "Nachtrocknung" sind komplizierter als die in der "Haupttrocknung"; hier spielen Kapillarwirkungen, Sorptionskräfte, Kristallbindungen u. ä. eine Rolle.

Aus der geschilderten Problemstellung ergibt sich die Aufgabe, eine Regeleinrichtung zu finden, die während der Haupttrocknung das Saugvermögen der Gasballastpumpe am Trocknungsrezipienten so regelt, daß die angesaugte Dampfmenge möglichst groß wird, aber nie größer, als es die Dampfverträglichkeit der Pumpe zuläßt. Ist die Haupttrocknung beendet, muß der Regler für die Nachtrocknung ein möglichst hohes Saugvermögen einstellen, damit der Druck im Trocknungsrezipienten möglichst niedrig wird.

Es sind Lösungen bekannt, bei denen zwischen Pumpe und Trocknungsrezipienten eine Leitung mit großem Leitwert und eine Leitung mit kleinem Leitwert parallel geschaltet sind. Die Leitung mit großem Leitwert ist absperrbar. Während der Haupttrocknung bleibt sie abgesperrt. Das Vakuum im Trocknungsrezipienten wird gemessen. Wenn es den Wert der Dampfverträglichkeit erreicht hat, wird das Absperrorgan geöffnet, so daß die Nachtrocknung mit beiden Leitungen stattfindet - wobei sich beide Leitwerte addieren. Erfolgt das Umschalten von Haupt- auf Nachtrocknung von Hand, muß das Vakuum am Meßgerät regelmäßig beobachtet werden. Soll es automatisch erfolgen, ist ein apparativer Aufwand in Form eines schaltfähigen Vakuum-Meßgerätes und eines mit Hilfsenergie betriebenen Absperrorgans erforderlich. Die geschilderte Lösung hat den Nachteil, daß nur zwei diskrete Werte des Saugvermögens eingestellt werden können, während die anfallende Dampfmenge ungefähr nach einer Exponentialkurve stetig abnimmt. Soll das Saugvermögen in der Übergangsphase von Haupttrocknung auf Nachtrocknung der stetigen Veränderung des Dampfanfalls folgend auch stetig verändert werden, ist ein aufwendiges Regelventil mit einer Programmsteuerung erforderlich.

Aus der DE-OS 32 15 972 ist ein Saugvermögensregler der eingangs genannten Art bekannt, mit dem das Saugvermögen druckabhängig ohne Hilfsenergie regelbar ist, indem ein Sollwert eingestellt wird und bei Unterschreiten des Sollwertes das Saugvermögen gedrosselt und bei Überschreiten erhöht wird. Dieser Regler, bei dem das Antriebsorgan gleichzeitig das Steuerorgan ist, kann naturgemäß die oben beschriebene Aufgabe nicht lösen, da er genau im entgegengesetzten Sinn reagiert.

Der vorliegenden Erfindung liegt die Aufgabe zugrunde, einen Saugvermögensregler der eingangs genannten Art zu schaffen, der für Vakuumtrocknungsprozesse besonders geeignet ist.

Erfindungsgemäß wird diese Aufgabe dadurch gelöst, daß das sich in Abhängigkeit von einem Differenzdruck verstellende Antriebsorgan derart zwischen der Referenzdruckkammer und der Pumpendruckkammer angeordnet ist, daß es seine Bewegungen in Abhängigkeit vom Differenzdruck zwischen diesen beiden Kammern ausführt und das Steuerorgan derart betätigt, daß der Durchlaßquerschnitt der Verbindung

- 4 -

zwischen Rezipientendruckkammer und Pumpendruckkammer mit abnehmendem Pumpendruck größer wird.

Ein in dieser Weise ausgebildeter Saugvermögensregler paßt das Saugvermögen zwischen einem Minimal- und einem Maximalwert während des gesamten Trocknungsprozesses, also sowohl während der Haupttrocknung wie auch während der Nachtrocknung und während des Übergangs von Haupt- auf Nachtrocknung, stetig und automatisch dem augenblicklichen Dampfanteil an. Er benötigt keine Hilfsenergie, kein Vakuum-Meßgerät, kein zusätzliches Absperrorgan und reagiert auch bei unvorhergesehenen Veränderungen des Dampfanfalls z. B. durch Temperaturänderung immer so, daß einerseits die Gasballastpumpe vor unzulässigen Dampfmengen geschützt ist, daß aber andererseits immer eine optimale Dampfmenge gefördert wird.

Zweckmäßigerweise ist die an die Pumpendruckkammer angeschlossene Vakuumpumpe eine mit Gasballast betriebene Pumpe, und der Druck in der Referenzdruckkammer ist etwas niedriger als der Sattdampfdruck, welcher der Dampfverträglichkeit der Gasballastpumpe entspricht.

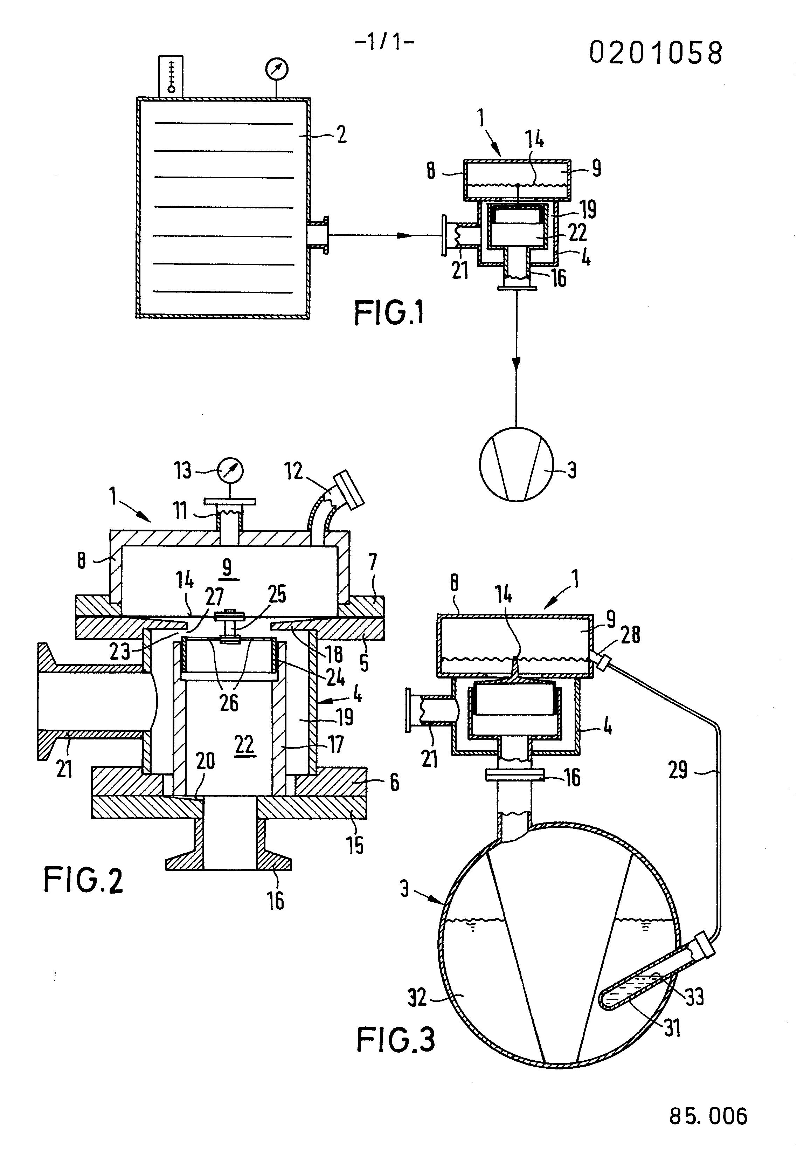

Weitere Vorteile und Einzelheiten der Erfindung sollen anhand von in den Figuren 1 bis 3 dargestellten Ausführungsbeispielen erläutert werden.

Fig. 1 zeigt schematisch den erfindungsgemäßen Saugvermögensregler 1, der zwischen dem Rezipienten 2, in dem ein Vakuum- trocknungsprozeß stattfindet, und der Vakuumpumpe 3, vorzugsweise einer mit Gasballast betriebenen Vakuumpumpe, angeordnet ist. Der Saugvermögensregler umfaßt ein Gehäuse 4 mit stirnseitig angeordneten Flanschen 5 und 6 (siehe Fig. 2). Mit dem Flansch 5 ist der Flansch 7 verbunden, der ein topfförmiges

Gehäuse 8 zur Bildung der Referenzdruckkammer 9 trägt. Das topfförmige Gehäuse 8 ist mit zwei Anschlußstutzen 11 und 12 ausgerüstet, die in nicht näher dargestellter Weise dem Anschluß eines Druckmeßgerätes 13 (Stutzen 11) und der Einstellung des Referenzdruckes in der Referenzdruckkammer 9 (Anschluß 12) dienen. Zwischen den Flanschen 5 und 7 ist die Membran 14 als Steuerorgan eingespannt und bildet damit den dichten Abschluß der Referenzdruckkammer 9.

Mit dem Flansch 6 ist ein weiterer Flansch 15 verbunden, der den Anschlußstutzen 16 zur Verbindung des Saugvermögensreglers 1 mit der Vakuumpumpe 3 trägt. Außerdem trägt der Flansch 15 einen in das Gehäuse 4 hineinragenden Rohrabschnitt 17, der mit seiner freien Stirnseite bis in die Nähe eines nach innen hineingezogenen Randes 18 am Flansch 5 in das Gehäuse 4 hineinragt. Dadurch entsteht ein Ringraum 19, der über den Anschlußstutzen 21 mit dem Rezipienten 2 verbindbar ist und die Rezipientendruckkammer bildet. Der Innenraum des Abschnittes 17 steht mit dem Anschlußstutzen 16 in Verbindung und bildet die Pumpendruckkammer 22. Zusätzlich ist eine weitere nutförmige Verbindung 20 zwischen Rezipientendruckkammer 19 und Pumpendruckkammer 22 vorgesehen, die an der tiefsten Stelle angeordnet ist. Sie hat einen sehr kleinen Leitwert und dient der Ableitung von eventuell anfallendem Kondensat zur Pumpe hin.

Die Rezipientendruckkammer 19 steht mit der Pumpendruckkammer 22 über den Spalt 23 zwischen der Stirnseite des Rohrabschnittes 17 und dem eingezogenen Rand 18 des Flansches 5 in Verbindung. Um den Durchlaßquerschnitt dieser Spaltöffnung regeln zu können, ist ein Zylinderabschnitt 24 vorgesehen, der im Rohrabschnitt 17 verschiebbar geführt ist. Über den Stift 25 und Streben 26 ist der Zylinderabschnitt 24 mit der Membran 14 verbunden und führt dadurch die Bewegungen der Membran 14 aus. Die

0201058

freie Stirnseite des Zylinderabschnittes 24 und der nach innen eingezogene Rand 18 des Flansches 5 bilden die bezüglich des Durchlaßquerschnittes regelbare, spaltförmige Verbindung 27 zwischen Rezipientendruckkammer 19 und Pumpendruckkammer 22.

Beim dargestellten und beschriebenen Ausführungsbeispiel bildet die Membran 14 das Antriebsorgan, dessen Bewegungen auf das Steuerorgan (Zylinderabschnitt 24) übertragen werden und damit die Spaltöffnung 27 verändern. Diese Veränderung hat eine Veränderung des Saugvermögens der angeschlossenen Vakuumpumpe zur Folge. Steigt der Pumpendruck gegenüber dem Referenzdruck in der Referenzdruckkammer 9, dann verkleinert sich die Spaltöffnung 27. Das Saugvermögen der Vakuumpumpe wird geringer. Sinkt der Pumpendruck gegenüber dem Referenzdruck, vergrößert sich die Spaltöffnung 27, so daß das Saugvermögen steigt.

Wird der Referenzdruck gleich oder kleiner als der Druck der maximalen Dampfverträglichkeit der Vakuumpumpe 3 gewählt, so verhält sich der beschriebene Regler 1 genau so, wie es in der Aufgabenstellung gewünscht ist; er vergrößert das Saugvermögen während der Haupttrocknung so weit, wie es die Dampfverträglichkeit erlaubt, und öffnet nach Beendigung der Haupttrocknung automatisch bis zum maximalen Saugvermögen. Verändert sich der Dampfanfall zu irgendeinem Zeitpunkt während der Haupt-und Nachtrocknung, wirkt sich das immer als Druckänderung in der Pumpendruckkammer 22 aus, und der Regler reagiert automatisch immer in der richtigen Weise, nämlich bei Druckanstieg durch Abnahme und bei Druckabfall durch Zunahme des Saugvermögens. Ein mit einem solchen Regler optimierter Trocknungsprozeß verkürzt die Zeit für die Gesamttrocknung (Haupttrocknung, Übergangsphase und Nachtrocknung) erheblich.

Der Spalt 27 zwischen Rezipienten-Druckkammer 19 und Pumpendruckkammer 22 kann auf verschiedene Weise realisiert werden. Normalerweise wird er als Ringspalt ausgeführt, indem der leichtgängig geführte zylinderförmige Abschnitt 24 in den Rohrabschnitt 17 eintaucht und je nach Eintauchtiefe mehr oder weniger Spaltöffnung freigibt. Der Ringspalt kann auch zwischen einem Kegel und einer ringförmigen Kante gebildet werden. Bei kleineren Reglern ist unter Umständen der Leitwert eines Ringspaltes schon zu groß, dann ist ein Kanal denkbar, der nur einen Teil des Zylinderumfangs freigibt. Schließlich sind auch flache Schieber denkbar, die gegen eine entsprechende Öffnung bewegt werden und damit veränderliche Schlitze freigeben.

Der Antrieb des den Spalt 27 erzeugenden Steuerorgans erfolgt beim dargestellten Ausführungsbeispiel durch die Membran 14. Auch ein Federbalg, ein Pneumatikkolben oder eine ähnliche Einrichtung ist als Antriebsorgan verwendbar, wobei die Antriebskraft erzeugt wird durch die Druckdifferenz zwischen Pumpendruck und Referenzdruck. Wirkt eine Druckdifferenz, so bewegt sich das Steuerorgan zwischen zwei Extremstellungen, die die maximale und die minimale Spaltöffnung ergeben. Die minimale Spaltöffnung ist so ausgelegt, daß bei dem maximal zu erwartenden Sattdampfdruck in der Rezipientendruckkammer 19 der Druck in der Pumpendruckkammer 22 innerhalb der Dampfverträglichkeit der Pumpe bleibt. Die maximale Spaltöffnung ist so ausgelegt, daß gegenüber dem Leitwert der Anschlußleitungen kein nennenswerter Leitwertverlust eintritt, so daß die Druckdifferenz zwischen Rezipienten-Druckkammer 19 und Pumpendruckkammer 22 gegen Null geht. Durch diese Ausbildung wird erreicht, daß sich während der Haupttrocknung, bei hohem

Dampfanfall, die Extremstellung mit kleinster Spaltöffnung einstellt, während sich zum Ende der Nachtrocknung
die Extremstellung mit größter Spaltöffnung einstellt.
In der Übergangsphase werden Zwischenstellungen eingenommen,
die das Saugvermögen dem Dampfanfall optimal anpassen.

Fig. 3 zeigt ein Ausführungsbeispiel, bei dem der
Referenzdruck in der Referenzdruckkammer 9 exakt dem
Sattdampfdruck des abzupumpenden Dampfes angepaßt werden
kann. Dazu ist die Referenzdruckkammer 9 über den
Anschlußstutzen 28 und die Leitung 29 mit einer
Kapsel 31 verbunden, die in den Ölvorrat 32 der Vakuumpumpe 3 eintaucht. Die Kapsel 31 ist mit einer verdampfbaren Flüssigkeit 33 gefüllt. Zweckmäßigerweise ist das
diejenige Flüssigkeit, die beim Trocknungsprozeß als
Dampf abgepumpt werden soll.

Als Referenzdruck wirkt dann der Sattdampfdruck der in
der Kapsel 31 befindlichen Flüssigkeit bei der jeweils
vorhandenen Temperatur der Vakuumpumpe beziehungsweise
ihres Dichtmittels. Solange die Pumpe kalt ist, ist ihre
Dampfverträglichkeit reduziert. Gleichzeitig ist aber
auch der Sattdampfdruck der in der Kapsel 31 befindlichen
Flüssigkeit niedriger, so daß der damit niedrigere Referenzdruck für ein vermindertes Saugvermögen der Vakuumpumpe 3
sorgt.

0201058

LEYBOLD-HERAEUS GMBH
Köln-Bayenthal


Saugvermögensregler für Vakuumtrocknungsprozesse

PATENTANSPRÜCHE


1. Saugvermögensregler für Vakuumpumpen mit einer mit dem zu evakuierenden Rezipienten zu verbindenden Kammer (Rezipientendruckkammer), einer mit der Vakuumpumpe zu verbindenden Kammer (Pumpendruckkammer), einer Referenzdruckkammer, einer Verbindung zwischen der Rezipientendruckkammer und der Pumpendruckkammer mit einstellbarem Durchlaßquerschnitt, einem in Abhängigkeit von einem Differenzdruck sich verstellenden Antriebsorgan und einem davon angetriebenen Steuerorgan für die Einstellung des Durchlaßquerschnittes der Verbindung zwischen Rezipientendruckkammer und Pumpendruckkammer, d a d u r c h   g e k e n n z e i c h - n e t , daß das Antriebsorgan (14) derart zwischen Referenzdruckkammer (9) und Pumpendruckkammer (22) angeordnet ist, daß es seine Bewegungen in Abhängigkeit vom Differenzdruck zwischen diesen beiden Kammern ausführt und das Steuerorgan (24) derart betätigt, daß der Durchlaßquerschnitt der Verbindung (27) zwischen Rezipientendruckkammer (19) und Pumpendruckkammer (22) mit abnehmendem Pumpendruck größer wird.


2. Saugvermögensregler nach Anspruch 1, d a d u r c h   g e k e n n z e i c h n e t , daß in der Referenz- druckkammer (9) ein Druck herrscht, der gleich oder kleiner als der Sattdampfdruck der abzupumpenden Flüssigkeit und damit der Dampfverträglichkeit der angeschlossenen Vakuumpumpe ist.

3. Saugvermögensregler nach Anspruch 1 oder 2, d a d u r c h   g e k e n n z e i c h n e t , daß der Druck in der Referenzdruckkammer (9) der von der Temperatur der angeschlossenen Vakuumpumpe (3) abhängigen Dampfverträglichkeit angepaßt ist.

4. Saugvermögensregler nach Anspruch 3, d a d u r c h g e k e n n z e i c h n e t , daß die Referenzdruck- kammer (9) mit einer in den Ölvorrat (32) der ange- schlossenen Vakuumpumpe (3) eintauchenden Kapsel (31) in Verbindung steht, welche eine verdampfbare Flüssigkeit (33) enthält.

5. Saugvermögensregler nach Anspruch 4, d a d u r c h g e k e n n z e i c h n e t , daß die Kapsel (31) die Flüssigkeit enthält, die mit der Vakuumpumpe (3) über den Saugvermögensregler (1) abgepumpt werden soll.

6. Saugvermögensregler nach einem der vorhergehenden Ansprüche, d a d u r c h   g e k e n n z e i c h - n e t , daß das Steuerorgan (14) als Membran, Federbalg, Pneumatikkolben oder dergleichen ausgebildet ist.

7. Saugvermögensregler nach einem der vorhergehenden Ansprüche, d a d u r c h   g e k e n n z e i c h - n e t , daß das Regelorgan als mit dem Steuerorgan (14) verbundener, geführter zylinderförmiger Abschnitt (24) ausgebildet ist, dessen eine Stirnseite mit einem feststehenden Rand (18) die bezüglich ihres Durchlaßquerschnittes regelbare Verbindung (27) zwischen Rezipientendruckkammer (19) und Pumpendruckkammer (22) bildet.

8. Saugvermögensregler nach einem der vorhergehenden Ansprüche, d a d u r c h   g e k e n n z e i c h - n e t , daß die regelbare Verbindungsöffnung (27) als Ringspalt oder als Ringspaltabschnitt ausgebildet ist.

9. Saugvermögensregler nach einem der vorhergehenden Ansprüche, d a d u r c h g e k e n n z e i c h n e t, daß zwischen der Rezipientendruckkammer (19) und der Pumpendruckkammer (22) eine weitere, dem Kondensatablauf dienende Verbindungsöffnung (20) mit kleinem Leitwert vorgesehen ist.

0201058

FIG.1

FIG.2

FIG.3

85.006